# EUROPÄISCHE PATENTSCHRIFT

(11) **EP 0 708 896 B1**
(45) Veröffentlichungstag und Bekanntmachung des Hinweises auf die Patenterteilung: **16.07.1997**
(21) Anmeldenummer: 94917640.8
(22) Anmeldetag: 10.05.1994
(51) Int. Cl.: F16H 9/16

(54) **STUFENLOS VERSTELLBARES FORMSCHLÜSSIGES SATELLITENGETRIEBE**
CONTINUOUSLY VARIABLE POSITIVE PLANETARY GEAR
ENGRENAGE SATELLITE REGLABLE EN CONTINU PAR LIAISON DE FORME

(30) Priorität: 19.07.1993 DE 4324123; 01.09.1993 DE 4329441; 26.11.1993 DE 4340374; 17.12.1993 DE 4343145
(43) Veröffentlichungstag der Anmeldung: 01.05.1996
(73) Patentinhaber: SATELLITE GEAR SYSTEM LTD., Dublin 2 (IE)
(72) Erfinder: CHILMAN, John, Alfred, Painswick Glos. (GB)
(74) Vertreter: Vomberg, Friedhelm, Dipl.-Phys.
(86) Internationale Anmeldenummer: EP9401593
(87) Internationale Veröffentlichungsnummer: WO9503503

(56) Entgegenhaltungen:
- DE-A- 4 317 478
- DE-C- 866 288
- FR-A- 1 078 473
- FR-A- 2 257 826
- FR-E- 24 020
- J. Volmer, Getriebetechnik Lehrbuch, VEB Verlag Technik Berlin, 1980, Seiten 100 bis 105

## Beschreibung

Die Erfindung betrifft ein stufenlos oder quasistufenlos verstellbares formschlüssiges Satellitengetriebe mit einem Antriebs- und einem Abtriebselement, mit mehreren einzelnen Rädern, die gemeinsam ein Satellitenrad darstellen, das mit einem Zentralrad in einer permanenten Formschlußverbindung steht, wobei das Verhältnis der wirksamen Radien des Satellitenrades und des Zentralrades und die gegenseitige exzentrische Lage des Satellitenrades und des Zentralrades zueinander, die durch geeignete Mittel variiert werden kann, das Drehzahlverhältnis zwischen Antriebs- und Abtriebselement bestimmt,
- wobei die das Satellitenrad bildenden Räder bei exzen trischer Lage zu dem Zentralrad einen drehmomentübertragenden Lastweg und einen lastfreien Weg zyklisch durchlaufen,
- wobei die Räder einerseits um die Satellitenradachse und andererseits über eine richtungsgeschaltete Kupplung nur in eine Richtung um ihre eigene Achse drehbar angeordnet sind, und
- wobei die Räder beim Übergang vom lastfreien Weg zum Lastbogenweg durch den Formschlußeingriff die Eigenrotation blockierend das anliegende Drehmoment übertragen.

Ein solches Getriebe ist nach der FR-A-2 257 826 bekannt. Um die üblicherweise vorhandenen Ungleichförmigkeiten zu kompensieren, wird in der genannten Druckschrift vorgeschlagen, die Anzahl der Räder zu erhöhen.

Die im übrigen nach dem Stand der Technik bekannten formschlüssigen Schaltkupplungen haben den Nachteil, daß sie nur im Stillstand bzw. bei Synchronlauf der Wellen einschaltbar sind. Bekannte Ausführungsformen sind Klauenkupplungen und Zahnkupplungen. Wegen der genannten begrenzten Schaltmöglichkeiten wird insbesondere im Kraftfahrzeugbau auf kraftschlüssige Schaltkupplungen zurückgegriffen, bei denen die Drehmomentübertragung durch Reibung erfolgt. Bei diesen Kupplungen müssen die gegenseitigen Reibflächen unter Last bei hohen Drehzahlen geschaltet werden, wobei erst allmählich ein Reibungsschluß auftritt. Der Nachteil dieser Kupplung besteht in dem hohen Verschleiß, der durch die Reibungswärme noch verstärkt wird. Da in den meisten Fällen ein einziges Übersetzungsverhältnis für alle Betriebszustände des Antriebs nicht optimal ist, wird im Regelfall auf ein stufenweise geschaltetes Getriebe zurückgegriffen, das verschiedene Übersetzungen ermöglicht. Hierdurch ergibt sich gegenüber dem nur ein Übersetzungsverhältnis übertragenden Getriebe eine verbesserte, jedoch noch keine optimale Anpassung an den Bedarf, ferner das Problem der Zugkraftunterbrechung beim Schalten sowie die notwendige Synchronisation der Zahnräder beim Gangwechsel.

Ideal wäre eine stufenlose Anpassung der jeweiligen Übersetzung während des Betriebes ohne Zugkraftunterbrechung. Solche stufenlose Getriebe sind als sogenannte P.I.V.- oder CVT-Getriebe bekannt. Diese Getriebe basieren auf einer Kraftübertragung, bei der verschiedene Laufradien der in Verbindung stehenden Räder einstellbar und hierüber das Übersetzungsverhältnis variiert werden kann. Um nach diesem Prinzip die Übersetzung zu verstellen, muß die Veränderung der Laufradien stetig und übergangslos sein, woraus folgt, daß die im Eingriff befindlichen Rader keine formschlüssige Verbindung haben können, da diese eine Radialbewegung blockieren würde. Daher beruhen alle nach dem Stand der Technik bekannten Getriebe auf Reibschluß in Form von Keilriemen, Flachriemen, Reibrädern und -scheiben mit den bekannten Nachteilen des Schlupfes, eines hohen Verschleißes unter Bildung von Einlaufriefen, dem Erfordernis hoher Anpreß- und Verstellkräfte sowie einem relativ schlechten Gesamtwirkungsgrad.

Eine Alternative wird in der DE-A 43 17 478.7 (veröffentlicht am 10.3.1994) aufgezeigt, in der ein formschlüssiges Getriebe als Zugmittelgetriebe beschrieben wird. Dieses Getriebe besitzt einen antriebsseitigen Satz planetenartig umlaufender, drehbar gelagerter Satellitenräder, die stufenlos radial verstellbar angeordnet und von einem Zugmittel umfaßt sind, welches das durch den eingestellten radialen Abstand bestimmte Drehzahlverhältnis auf ein Abtriebsrad überträgt. Die Durchmesserveränderung wird durch sogenannten Satellitenräder mit kleinerem Durchmesser bewirkt. Um während des Verstellens zum Ausgleich des Einlauffehlers in allen Radialpositionen, die nicht einem ganzzahligen Vielfachen der Kettenteilung entsprechen, Drehmomente übertragen zu können, wird vorgeschlagen, daß die Satellitenräder auf und relativ zu der Antriebs- und/oder Abtriebsscheibe in einer oder in beiden Richtungen freilaufen können oder blockiert sind, wobei die Freilauf- und/oder Blockierschaltung von der von dem Zugmittel ausgeübten Radialkraft und/oder von der Phasenlage der Antriebs- bzw. Abtriebsscheibe angesteuert oder ausgelöst wird. Insbesondere kann die Satellitenradwelle als Hohlwelle ausgebildet sein, die unter Federkraft in einem Käfig anliegt, wobei bei Erhöhung der Radialkraft auf die Kettenradwelle die Hohlwelle gegen die Federkraft verschoben wird und hierbei ein Hebel verschwenkt wird, der einen Zylinderkäfig für die Klemmrollen oder Klemmkugeln des Freilaufes so verdreht, daß die Rollen oder Kugeln in die keilförmigen Taschen eines feststehenden Innen- oder Außensternes getrieben werden.

Es ist Aufgabe der vorliegenden Erfindung, das eingangs genannte formschlüssige Satellitengetriebe dahingehend zu verbessern, daß die Ungleichförmigkeit der Drehmomentübertragung zumindest teilweise kompensiert wird.

Diese Aufgabe wird durch das im Anspruch 1 beschriebene Satellitengetriebe gelöst, das dadurch gekennzeichnet ist, daß eine Ungleichförmigkeit der Drehmomentübertragung durch Variation der durch den Lastbogen bestimmten wirksamen Radien und/oder der wirksamen Tangentialkomponenten durch eine zyklische Regelung zumindest teilweise kompensiert wird.

Nach der Erfindung ist mindestens ein im Durchmesser verstellbares Satellitenrad vorgesehen, das mit einem Zentralrad in einer permanenten Formschlußverbindung steht, wobei das Durchmesserverhältnis der beiden Räder zueinander die gegenseite exzentrische Lage der Räder zueinander und damit das Drehzahlverhältnis der Räder bestimmt. Ist nach einer weiteren Ausgestaltung der Erfindung das Zentralrad als innenverzahntes Hohlrad ausgebildet, kann bei einer maximal möglichen Durchmessererweiterung auf den Innenradius der Innenverzahnung des dann koaxial zum Zentralrad angeordneten Satellitenrad eine Übersetzung der Drehzahlen im Verhältnis von 1 : 1 erfolgen, da die gesamte Verzahnung des innenliegenden Satellitenrades in die Verzahnung des Zentralrades eingreift. Verringert man den Durchmesser des Satellitenrades, kann der Verzahnungseingriff nur dann aufrechterhalten werden, wenn das innenliegende Satellitenrad aus der koaxialen Lage in eine exzentrische Lage verschoben wird. Bei Aufrechterhaltung des Verzahnungseingriffes rollt das innenliegende Satellitenrad mit seinem Außenmantel auf dem Innenmantel des Zentralrades ab, d.h., es führt sowohl eine Eigenrotation als auch eine Rotation um die Achse des Zentralrades aus. In entsprechender Weise kann auch vorgesehen sein, daß das Zentralrad eine Außenverzahnung besitzt, worüber das Satellitenrad mit einer entsprechenden Außenverzahnung abrollt. Auch hierbei kann entsprechend der Durchmesserverstellung des Satellitenrades der Formschluß nur aufrechterhalten werden, wenn das Satellitenrad gegenüber dem Zentralrad eine exzentrische Verstellung erfährt. Die vorliegende Erfindung erfaßt auch solche Ausführungsformen, bei denen sowohl das Zentralrad als auch das Satellitenrad, also beide, im Durchmesser variabel sind, was untenstehend noch erläutert wird.

Da in der Praxis Drehzahlen, die nur annähernd in dem Bereich der meisten realen, technischen Anwendungen liegen, die Anpassungsfehler in die Radialstellungen der Satellitenräder während des Eingriffes und ausgelöst durch den Verstellvorgang sehr gering sind, gehen die Anpassungsfehler praktisch in der Fertigungstoleranz unter oder können durch eine geeignete und abgestimmte Elastizität der Geometrie der Satellitenposition ausgeglichen werden. Beispielsweise greifen bei einer Drehzahl von z.B. 50 Umdrehungen pro Sekunde und 5 Satelliten 250 Satelliten pro Rad und Sekunde in das Zugmittel ein, so daß bei einer Regelgeschwindigkeit, die von Anschlag bis Anschlag z.B. nur 10 Sekunden benötigt, die Relativbewegung zwischen den Satelliten während eines Eingriffszyklus nur 1/2500, also nur 0,4 o/oo der Radialbewegung ausmacht. Die hieraus resultierende elastische Ausgleichsbewegung der Satelliten führt nur zu einer geringen Einbuße beim Wirkungsgrad, die zudem nur während der Verstellung anfällt und marginale Größenordnungen erreicht, so daß sie keine unakzeptable Verschlechterung darstellt. Die Durchmesserverstellung des Satellitenrades oder des Zahnrades kann - wie beispielsweise in der DE-A 43 17 478 beschrieben - dadurch erzielt werden, daß das Satellitenrad aus mehreren einzelnen im Durchmesser kleineren Rädern besteht, die um die Satellitenradachse einerseits und in einer Richtung um ihre eigene Achse andererseits drehbar sind und die radial verstellt werden können, so daß sie - bei einer exzentrischen Lage des Satellitenrades zu dem Zentralrad - einen Drehmoment übertragenden Lastbogenweg und einen lastfreien Weg zyklisch durchlaufen und daß sie sich beim Übergang vom lastfreien Weg zum Lastbogenweg, d.h. im Moment des Formschlußeingriffes in das Zentralrad frei synchronisierend bewegen, aber nach Formschlußeingriff die Eigenrotation blockierend das anliegende Drehmoment übertragen. Mit eingeschlossen sind auch solche Ausführungsformen, bei denen jeweils zwei Satelliten in Tandemformation hintereinander angeordnet sind, so daß sie direkt oder indirekt in gegenseitigem, formschlüssigem Eingriff stehen, so daß sie beim Einlaufen in die Zentralradverzahnung sich frei synchronisieren können, jedoch nach dem Einlaufen in den Formschluß des Gegenstückes in ihrer Rotationsbewegung blockiert sind. Diese Ausführungsform kann für Sonderanwendungen mit sehr hohen Verstellgeschwindigkeiten bei kleinen Drehzahlen, wie z.B. bei Fahrrädern, noch dahingehend variiert werden, daß die Träger, auf denen je ein Satellitentandem plaziert ist, so gekippt werden können, daß jeweils ein Satellit aus dem Eingriff mit der Zentralradverzahnung ausklinkt, so daß die im Eingriff verbleibenden Satellitenräder frei drehen und eine beliebige Radialverschiebung ausüben können. Nach Abschluß des Verstellvorganges werden die Satellitenträger wieder in die Ausgangsposition zurückgeschwenkt. Bei dieser Ausführungsform ist zwar auch eine Zugkraftunterbrechung gegeben, jedoch bleibt diese auf Sonderfälle schneller Stellgeschwindigkeit bei langsamer Drehzahl oder im Stillstand beschränkt. Bei der dargestellten Tandemversion kann ebenfalls vorgesehen sein, die Zähne der einzelnen im Durchmesser kleineren Räder in einer zum Leistungseingriff axial versetzten Ebene vollkommen spitz zulaufend zu gestalten, wodurch das Anschnäbeln besonders vereinfacht wird, während die Zähne zur Drehmomentübertragung aus hochbelastbaren Materialien und in Standardzahngeometrien gefertigt sind.

Zu dem vorbeschriebenen Prinzip, nach dem das Satellitenrad abrollt und ein jeweiliges Anschnäbeln erforderlich ist, kann nach einer alternativen Ausgestaltung der Erfindung auch vorgesehen werden, daß die Zahnräder in permanentem Eingriff bleiben. Diese Ausführungsform wird in Anspruch 3 beschrieben und besitzt insbesondere die Merkmale, daß mit einem Zentralrad und mehreren im Durchmesser kleineren, mit dem Zentralrad in permanentem Eingriff stehenden und auf einer Scheibe angeordneten oder über Kraftübertragungsmittel mit dieser verbundene Satelliten vorgesehen sind, die um ihre eigene Drehachse in einer Richtung über Freiläufe drehbar sind, in der Gegenrichtung jedoch blockieren. Die Achse der Scheibe ist zur Zentralachse exzentrisch verschiebbar, so daß sich in Abhängigkeit von der exzentrischen Verschiebung unterschiedliche Drehzahl- und Drehmomentverhältnisse zwischen der Scheibe und dem Zentralrad einstellen lassen.

Sind die Satelliten jeweils auf Radialstützen gelagert, die verschiedene radiale Positionen, beispielsweise über Führungen, einnehmen können, kann erreicht werden, daß die vorzugsweise unter Federbelastung oder durch die Radialstütze gegen die Verzahnung des Zentralrades gepreßten Satelliten stets im Eingriff bleiben, so daß sie zyklisch bei einer jedem Umdrehung verschiedene Radialpositionen einnehmen, so daß die insgesamt auf dem Umkreis eines Zahnrades oder einer Ketten- oder sonstigen Zugmittelumschlingung ablaufen. Sind nun die Satelliten bezüglich ihrer Eigenrotation auf Freiläufen gelagert, so wird in allen exzentrischen Achspositionen das Rad die gesamte Last übertragen, das sich am nächsten an der kürzesten Radialposition befindet und alle anderen Räder werden zu einer Umfangsgeschwindigkeit von dem erstgenannten Rad angetrieben, die größer ist als die Umfangsgeschwindigkeit des antreibenden Rades, d.h., die Räder müssen sich in Freilaufrichtung zusätzlich um ihre eigene Achse drehen, um im verzahnten Eingriff zu bleiben. Bei dieser Ausführungsform entfällt das Problem der Synchronisation nach dem Einlaufen aus dem Leerbogen.

Bei der Verwendung von das Satellitenrad bildenden einzelnen Rädern oder Satelliten mit einer richtungsgeschalteten Kupplung wird eine mechanisch arbeitende Freilaufkupplung, vorzugsweise eine Klemmkörperfreilaufkupplung oder ein Klinkenfreilauf, oder eine visko-hydraulische oder auch eine elektromechanische Kupplung bevorzugt.

Schaltgenaue Klemmfreiläufe unterliegen einer Lebensdauerbegrenzung, bei der das Nennmoment M_{zul} bei 10⁸ Lastspielen auf 50 % abnimmt. Um solche Freiläufe in einen Antrieb zu integrieren, bei dem zyklische Schaltvorgänge bei jeder Umdrehung ausgelöst werden, ergibt sich ein Dimensionierungsproblem. Für den Fall, daß der Freilauf hochübersetzt wird, nehmen die Nennmomente ab, jedoch die Lastspiele zu, da die Drehzahl steigt, und bei einer Abwärtsuntersetzung umgekehrt. Dies ist bei solchen Freiläufen dimensionskritisch, bei denen 10⁸ Lastspiele im Lebenszyklus erreicht werden, z.B. bei Fahrzeuggetrieben. Bei dem vorliegenden Satellitengetriebe ist daher für Sonderfälle vorgesehen, daß die Drehzahl der Freiläufe relativ zu den Satellitenrädern durch einen oder mehrere Stirnrad- oder Planetensätze oder andere getriebetechnische Ausführungsformen einer Drehzahlübersetzung verändert wird. Diese Veränderung der Drehzahl, z.B. ins Schnelle im Sinne einer Drehzahlerhöhung, vermindert die Größenordnung der im Freilauf auftretenden Momente, ohne jedoch die Schaltfrequenz bzw. die Lastspielzahl zu erhöhen. Es wird demnach eine Hochübersetzung auf hohe Drehzahlen und kleine Momente gewählt, ohne daß die Lastspielzahl zunimmt, da jeder Schaltvorgang genau einmal pro Umdrehung des Abtriebsrades und nicht pro Umdrehung des einzelnen Rades des Satellitenrades bzw. Satelliten erfolgt.

In einer alternativen Lösung, d.h. bei der Verwendung von Sperrklinkenfreiläufen, ergibt sich hingegen eine nahezu unbegrenzte Dauerfestigkeit, ferner sind Sperrklinkenfreiläufe preisgünstig. Der Nachteil der verminderten Schaltgenauigkeit (8 bis 10°) wird durch die im vorigen Abschnitt beschriebene Übersetzung vermindert. Außerdem verschiebt sich durch den Winkelfehler des Schaltvorganges lediglich der Lastübergabepunkt zwischen zwei Satelliten, ohne einen Funktionsfehler zu verursachen. Ein dabei evtl. auftretender Drehmomentensprung kann durch eine elastische Bauelemente in der Freilaufverriegelung abgefangen werden. Weiterhin ist in einer bevorzugten Ausführung bei Verwendung von Sperrklinkenfreiläufen eine Regelung der Übersetzung dergestalt vorzusehen, daß nicht in unendlich kleinen Stufen verstellt wird, sondern in Sprüngen jeweils solche Übersetzungsverhältnisse gewählt werden, die im wesentlichen zu einer Rotation in den Satellitenrädern führen, die einer Klinken- bzw. Rampenbreite des Sperrklinkenfreilaufs führt, so daß kein Lastsprung mehr erzeugt wird. Dies Veränderung von stufenloser zu quasistufenloser Regelung der Übersetzungsverhältnisse stellt bei hinreichend kleinen Verriegelungswinkeln in der Praxis keinen gravierenden Nachteil dar.

Nach einer weiteren Ausgestaltung der Erfindung werden die einzelnen Räder des Satellitenrades oder Satelliten federbelastet und/oder auf ihren Freiläufen in Radialstützen gelagert, die vorzugsweise auf nicht linearen Bögen geführt werden.

Nach einer weiteren Ausgestaltung der Erfindung können das Zentralrad und/oder das Satellitenrad oder die Satelliten auf einer Antriebs- und/oder Abtriebsscheibe angeordnet sein, was den Vorteil besitzt, daß auf dieser jeweiligen Scheibe Führungen, Anlenkungen für die einzelnen Räder des Satellitenrades oder die Satelliten angebracht werden können. Vorzugsweise werden die einzelnen Räder des Satellitenrades oder die Satelliten jeweils über einen Hebel oder eine Kurbel an einer An- oder Abtriebsscheibe angelenkt.

Die Drehmomentübertragung erfolgt hierbei über die betreffenden Hebel oder Kurbeln. Mit der Momentenübertragung von einzelnen Rädern eines Satellitenrades oder von Satelliten auf das Zentralrad ergeben sich prinzipbedingt Bewegungsbahnen der einzelnen Räder, die in Relation zum wirksamen Mittelpunkt auch innerhalb des Lastbogenweges verschiedene wirksame Radien und verschiedene Tangentialkomponenten bewirken, was eine Ungleichförmigkeit des Übersetzungsverhältnisses zur Folge hat, die bei großen Exzentrizitäten Werte bis zu 1,5 oder mehr erreichen kann und dann die Laufruhe des Antriebes erheblich beeinträchtigt.

Nach einer weiteren Ausgestaltung der Erfindung wird die Ungleichförmigkeit der Drehmomentübertragung bzw. des Übersetzungsverhältnisses durch eine zyklische Regelung zumindest teilweise kompensiert. Dies kann auf verschiedene Arten erfolgen.

Nach einer ersten Ausführungsform wird die Kompensation durch einen Radienausgleich herbeigeführt bei dem im wesentlichen ein konstanter Mittelwert, Minimalwert oder Maximalwert mit gleichem Integral unter der Übertragungsfunktion gewählt wird, die durch das Verhältnis der Winkelgeschwindigkeiten des Antriebes zu der des Abtriebes in Abhängigkeit zum Drehwinkel bestimmt ist.

Nach einer weiteren Ausgestaltung wird die Ungleichmäßigkeit der Drehmomentübertragung bzw. des Übersetzungsverhältnisses durch eine kraftabhängige Federung und/oder durch Ausgleichsmassen kompensiert. Dies kann hydraulisch, pneumatisch oder sonstwie mechanisch erfolgen.

Die Regelung der relativen Exzentrizität führt zu einer Bewegung von mindestens einer der beiden Achsen. Um eine kinematische Weiterführung des Leistungsflusses in eine wiederum feststehende Achse zu ermöglichen, müsste eine flexible Welle oder ein Kardan- oder sonstiges Gelenk vorgesehen werden. In einer bevorzugten Ausführung wird die Relativbewegung nicht translatorisch sondern rotatorisch ausgeführt und die für den Verstellvorgang auf einer Kreisbahn geführte Achse rollt dabei auf einem Zahnradsatz ab, wobei ein Rad mittig zur bewegten Achse und das zweite bzw. die folgenden in einem Zahnrad enden, das wiederum konzentrisch zum Mittelpunkt der Kreisbahn liegt, auf welcher die bewegte Achse während des Verstellvorganges abläuft.

Durch diese Maßnahme und bei Integration von Ausgleichmassen zur Vermeidung von Unwuchten ist eine sehr hochfrequente Verstellung möglich.

Diese schnelle Verstellmöglichkeit kann dann auch genutzt werden, um die beschriebene Ungleichförmigkeit zu beseitigen. In phasenzyklisch verkleinerter wirksamen Radien wird die Exzentrizität hierbei vermindert und in phasenvergrößerter Radien vergrößert. Auf diese Art und Weise kann mit einer einfachen Geometrie eine Gleichförmigkeit erzielt werden.

In einer besonders bevorzugten Ausführungsform wird die Drehmomentübertragung zwischen dem jeweils als Scheibe, Rad oder Welle ausgebildeten Antriebsmittel und dem entsprechenden Abtriebsmittel über einen Kniegelenkhebel durchgeführt, wobei eine zyklisch gesteuerte oder gefederte Knickbewegung des Kniegelenkes die Ungleichförmigkeit der Drehmomente und der Drehzahlschwankungen kompensiert.

Die Bewegungsbahn der Kniegelenke beschreibt nach einer weiteren Ausgestaltung der Erfindung im Lastbogenweg einen Kreis, vorzugsweise über eine Kulissen-, Nocken-, Mehrgelenkketten und/oder Gestängeführung als Radialstütze. Die jeweils zum Ausgleich der genannten Schwankungen gewählten Geometrien sind vorzugsweise hinsichtlich der Amplitude der zyklischen Bewegung in Abhängigkeit von der Exzentrizität zeitlich konstant.

Die Freiläufe können über- oder untersetzt mit einer gegenüber den Satellitenrädern unterschiedlichen Drehzahl laufen. Weiterhin bleibt die Führung der Satellitenräder hinsichtlich des Zahnflankenspieles und/oder des Anpreßdruckes zum Zentralrad zeitlich konstant.

Insbesondere zur Kompensation der Ungleichmäßigkeit der Drehmomente oder im Hinblick der Einstellung eines gewünschten Übersetzungsverhältnisses kann die Drehzahlübersetzung in zwei oder mehr parallel oder in Reihe angeordneter Stufen erfolgen, wobei vorzugsweise die Phasenlage der Stufen so gewählt wird, daß sich die Ungleichförmigkeiten jeder einzelnen Stufe im wesentlichen gegenseitig kompensieren. Vorzugsweise werden zwei Stufen eine gemeinsame Exzenterscheibe und zur Kompensation der Ungleichförmigkeiten entsprechend phasenversetzte Antriebs- bzw. Abtriebsscheiben auf und/oder die Zahl der einzelnen Räder des Satellitenrades bzw. der Satelliten in zwei solchen Scheiben ist identisch.

Nach einer weiteren Ausgestaltung der Erfindung können mindestens zwei Stufen des Satellitengetriebes in ein Differentialgetriebe, das mit der Abtriebswelle verbunden ist, so eingespeist werden, daß sich die Ungleichförmigkeit der Drehmomente und Drehzahlübertragung im wesentlichen kompensiert.

Schließlich können auch mehrere Satellitenstufen mit in der Drehrichtung entgegengesetzten und/oder umschaltbaren Freiläufen oder über eine Umkehr- oder parallele Welle ansteuerbaren Wellen miteinander gekoppelt sein.

Die Vorteile des beschriebenen Satellitengetriebes liegen darin, daß es im Stillstand und unter Last verstellt werden kann, daß es schlupffrei und formschlüssig, geräuscharm und kompakt ist und sowohl einen guten Wirkungsgrad als auch eine hohe Dauerfestigkeit aufweist. Die Kosten liegen niedriger als bei vierstufigen Schaltgetrieben oder dreistufigen Kupplungsautomaten, wie Planetenautomaten mit Lamellenkupplungen. Synchronisation, Schiebemuffen oder Reibkupplungen entfallen vollständig.

Das Einsatzgebiet des erfindungsgemäßen Satellitengetriebes ist weit gesteckt und reicht vom Fahrrad über alle denkbaren motorgetriebenen Fahrzeuge bis zum Maschinenbau einschließlich dem Antrieb von Nebenaggregaten. Durch Ausgestaltung eines Antriebsstranges, bei dem die Welle des Motors über einen Stirnradsatz in zwei gegenläufig rotierende Wellen geteilt wird, kann in einer Welle ein Satellitengetriebe die Relativdrehzahl so steuern, daß eine gezielte Differenzdrehzahl einstellbar ist. Diese wiederum wird einem Differential an die Antriebsräder weitergeführt, so daß in dem Fall, daß der Differenzwert 0 eingestellt wird, eine Anfahrkupplung nicht mehr benötigt wird. Ein Fahrzeug mit einem solchen Antrieb ist selbsttätig gegen ein Rückrollen blockiert und fährt auch bei beliebig geringen Geschwindigkeiten ruckfrei. Lediglich eine ungewollte Bewegung durch Drehzahlschwankung im Satellitengetriebe muß durch eine Komparatorregelung oder eine formschlüssige Klauenkupplung zur Stillstandssicherung zwischen den beiden gegenläufigen Antriebswellen geschaltet werden, da ein ungewollter Kriechvorgang nicht mit einer Bremse aufgehalten werden könnte.

Die Erweiterung des Satellitengetriebes in der beschriebenen Weise erhöht den Bauteil- und Kostenaufwand nur relativ gering, da die benötigte Planetenstufe in die Konstruktion des Satellitengetriebes integriert werden kann und somit viele Bauteile, wie Wellen, Lager, Scheiben, Gehäuse und Bauteile zur Schmierung etc., mehrfach genutzt werden können.

Zusätzlich kann ein Schwungkreisel direkt mechanisch genutzt werden, so daß der Antriebsmotor eventuell nur noch für die stationäre Dauerleistung dimensioniert werden muß und für alle instationären Phasen der Leistungenfluß und -rückfluß über den Schwungkreisel geführt werden kann. Hierdurch eröffnet sich durch Fahrzeuge im Straßenverkehr ein enormes Einsparpotential beim Kraftstoffverbrauch und in der Schadstoffemission bei gleichzeitig besseren Fahrleistungen und erhöhtem Bedienungskomfort.

In der beschriebenen Form überträgt ein Satellitengetriebe zunächst Drehmomente und Leistungen nur in einer Richtung, da in der Gegenrichtung durch die Freiläufe keine Momente übertragen werden. Da jedoch für viele Anwendungsfälle ein Leistungfluß in beiden Richtungen gewünscht wird, sind entsprechende Vorkehrungen vorzusehen. In einer möglichen Ausführung werden die Freiläufe dazu in Gegenrichtung umgeschaltet. In einer weiteren Ausführung wird eine zweite Stufe mit gegensinniger Freilaufschaltung parallel oder in Reihe angeordnet. Bei entsprechender Regelung der Übersetzungen in beiden Stufen wird ein kinematisches Verblocken vermieden.

Ausführungsbeispiele der Erfindung sind in den Zeichnungen dargestellt. Es zeigen
- Fig. 1a bis d: jeweils Draufsichten (a, c) und Seitenansichten (b, d) einer ersten Ausführungsform eines Satellitengetriebes mit einem Zentralrad mit Innenverzahnung,
- Fig. 2 a, b: eine weitere Ausführungsform des Satellitengetriebes mit einem Zentralrad mit Außenverzahnung,
- Fig. 3: die Änderung der wirksamen Radien über dem Lastbogenweg und die jeweilige Umfangskraft,
- Fig. 4: eine schematische Darstellung des Abrollens der einzelnen Räder des Satellitenrades und des Zentralrades nach Fig. 2,
- Fig. 5: eine schematische Darstellung der Geometrie von Kniegelenken in Hebeln, die auf einem Führungskreis ablaufen,
- Fig. 6: eine Ausführungsform zur Realisierung Kniegelenke zwischen einer Abtriebsscheibe und Radialstützen, welche die einzelnen Räder des Satellitenrades tragen,
- Fig. 7: eine entsprechende Darstellung nach Fig. 5 unter Berücksichtigung der Exzentrizität,
- Fig. 8a, b: eine weitere Ausführungsform des Satellitengetriebes, hier zur Verwendung bei einem Fahrrad,
- Fig. 9a, b: dieselbe Ausführungsform in einer perspektivischen Ansicht,
- Fig. 10a , b: eine perspektivische sowie eine Draufsicht einer Abtriebsscheibe mit Tangentialstützen zur Momentenübertragung,
- Fig. 11a, b: eine perspektivische Ansicht sowie eine Draufsicht einer Zentraleinheit mit drei Radialträgern,
- Fig. 12a, b: ein Stirnradsatz der Antriebseinheit,
- Fig. 13: eine Antriebsstrangkonzeption für ein Fahrzeug mit einem Satellitengetriebe ohne Kupplung,
- Fig. 14: eine geschnittene Ansicht eines Getriebes mit einer zyklischen Steuerung zum Ausgleich der Ungleichförmigkeit und
- Fig. 15a, b: jeweils schematische Draufsichten auf ein Getriebe mit einer Zentraleinheit mit drei Stützen in unterschiedlichen Positionen.

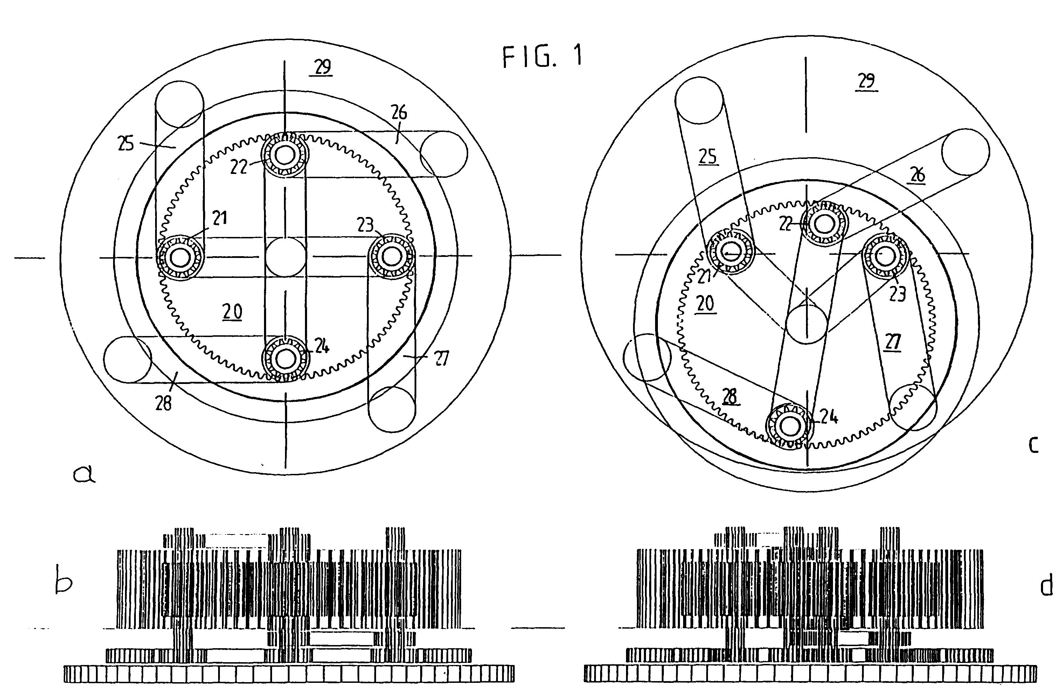

Fig. 1 zeigt ein Antriebsrad 20 als Zentralrad mit einer Innenverzahnung, entlang der einzelne Satellitenräder 21 bis 24 in stetem Umgriff umlaufen. Diese einzelnen Räder 21 bis 24 werden auf Radialstützen geführt, die, wie aus Fig. lc, d ersichtlich, bei einer exzentrischen Verschwenkung aus der in Fig. la dargestellten konzentrischen Lage heraus verschiedene Radialpositionen einnehmen. Durch Lagerung der einzelnen Räder 21 bis 24 auf Freiläufen bezüglich ihrer Eigenrotation wird in allen exzentrischen Achspositionen das Rad (hier 22) die gesamte Last übertragen, das sich am nächsten an der kürzesten Radialposition befindet. Die übrigen Räder, insbesondere Rad 24, werden zu einer Umfangsgeschwindigkeit angetrieben werden, die größer als die Umfangsgeschwindigkeit des Rades 22 ist, das als antreibendes Rad dient. Die Antriebsbewegung wird über Hebel 25 bis 28 auf eine Abtriebsscheibe 29 übertragen. Die Räder 21 bis 24 sind während der Drehbewegung dauernd im Eingriff mit der Innenverzahnung des Zentralrades 20, so daß eine Synchronisation nach dem Einlaufen aus einem Leerbogen entfällt. Jedes der Räder 21 bis 24 befindet sich so lange in blockierter Stellung des Freilaufes, d.h. lastübertragend im Lastbogenweg, wie betreffende Rad einen kürzesten Radius einnimmt, bis es durch ein nächstfolgendes Rad abgelöst wird, das dem Mittelpunkt der Abtriebsscheibe 29 näherkommt. In diesem Fall übernimmt das nächstfolgende Rad den Antrieb, wohingegen das vorlaufende Rad relativ schneller als die Umfangsgeschwindigkeit des Rades wird.

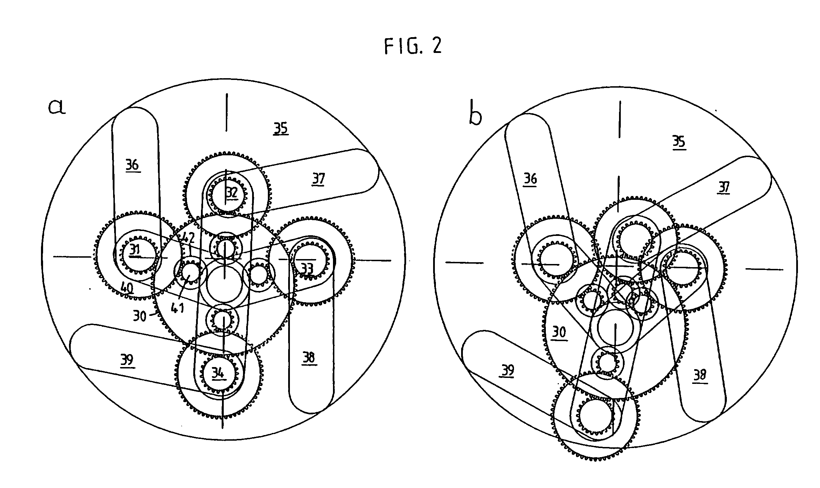

Nach der Ausführungsform entsprechend Fig. 2 besitzt das Antriebsrad 30 eine Außenverzahnung, worüber die einzelnen Satellitenräder 31 bis 34 formschlüssig Kraft bzw. Drehmomente auf die Abtriebsscheibe 35 unter Vermittlung von Hebeln 36 bis 39 übertragen. Die jeweiligen Stirnradpaarungen 40 und 41 übersetzen die Drehzahlen der jeweiligen einzelnen Räder hoch, so daß die Freiläufe, die das Zahnrad 41 gegenüber der betreffenden Radialstütze 42 halten, entsprechend kleinere Momente übertragen müssen und eine erhöhte Stellgenauigkeit erzielen. Fig. 2a zeigt eine leichte, Fig. 2b eine extreme exzentrische Lage des Antriebsrades 30 relativ zur Abtriebsscheibe 35. Bei der Stellung nach Fig. 2b wird ein Übersetzungsverhältnis von etwa 1 : 6 erreicht, wobei die Hebel 36 bis 39 entsprechend verschwenkt werden, um trotz der Exzentrizität den formschlüssigen Eingriff zwischen den einzelnen Rädern 31 bis 34 und dem Antriebsrad 30 zu gewährleisten.

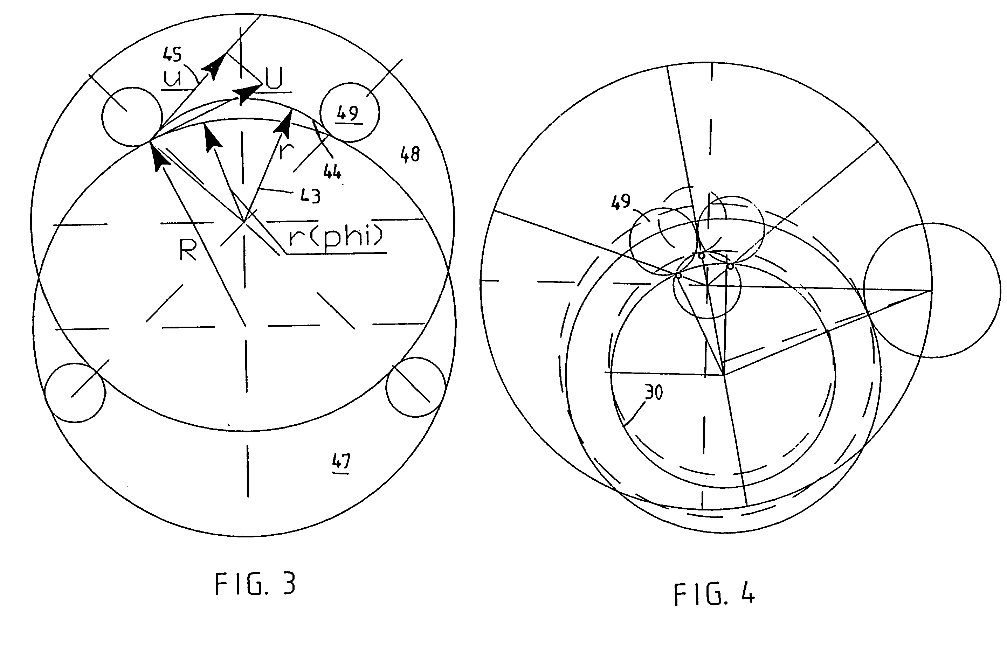

Die Änderung der wirksamen Radien 43 über dem Lastbogenweg 44 zeigt Fig. 3 ebenso wie die Umfangskraftkomponente 45 der Antriebskraft 46 zwischen der Antriebsscheibe 47 und der Abtriebsscheibe 48. Die einzelnen Räder sind mit 49 bezeichnet.

Fig. 4 zeigt das Ausmaß der Radialänderung der einzelnen Räder 49, wenn sich die Antriebsscheibe um ein geringfügiges Maß (von der durchgezogenen Stellung in die strichlinierte Stellung) verschiebt.

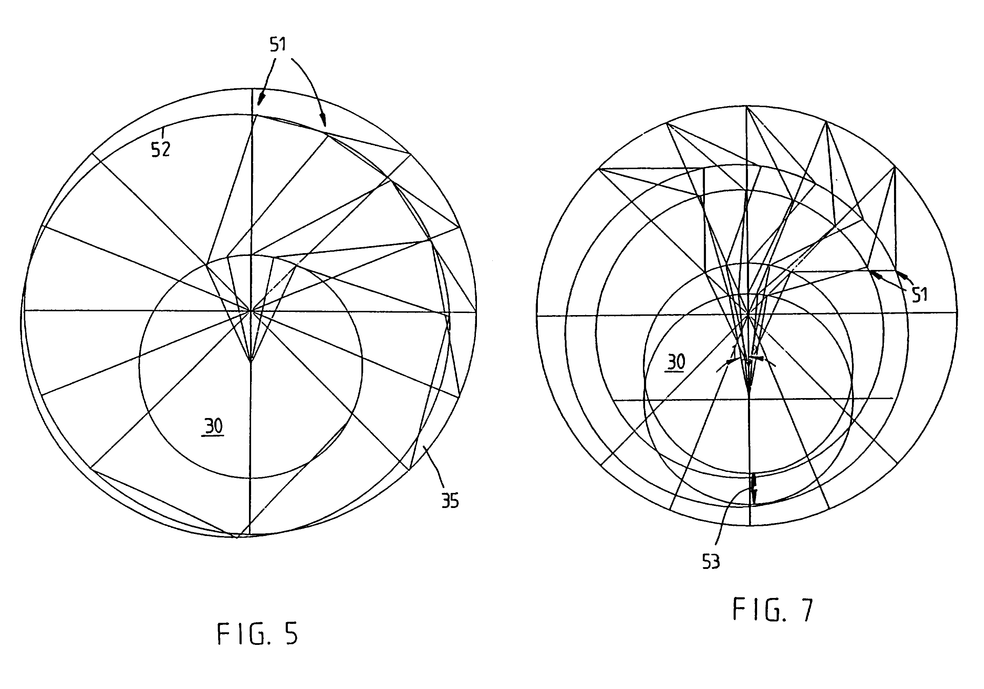

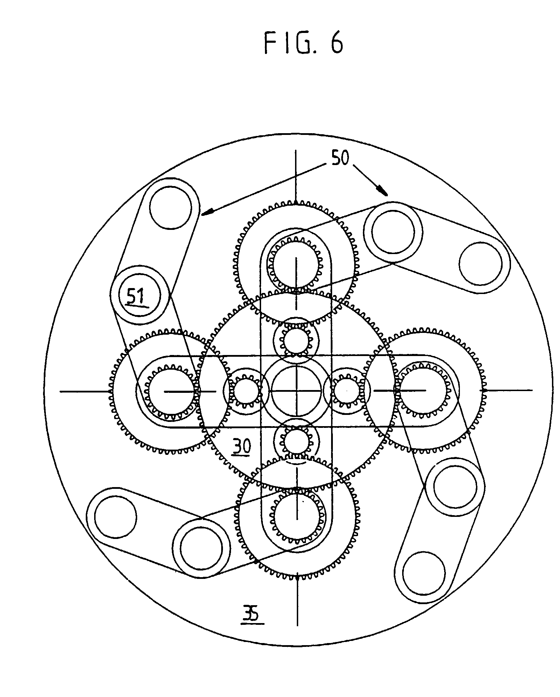

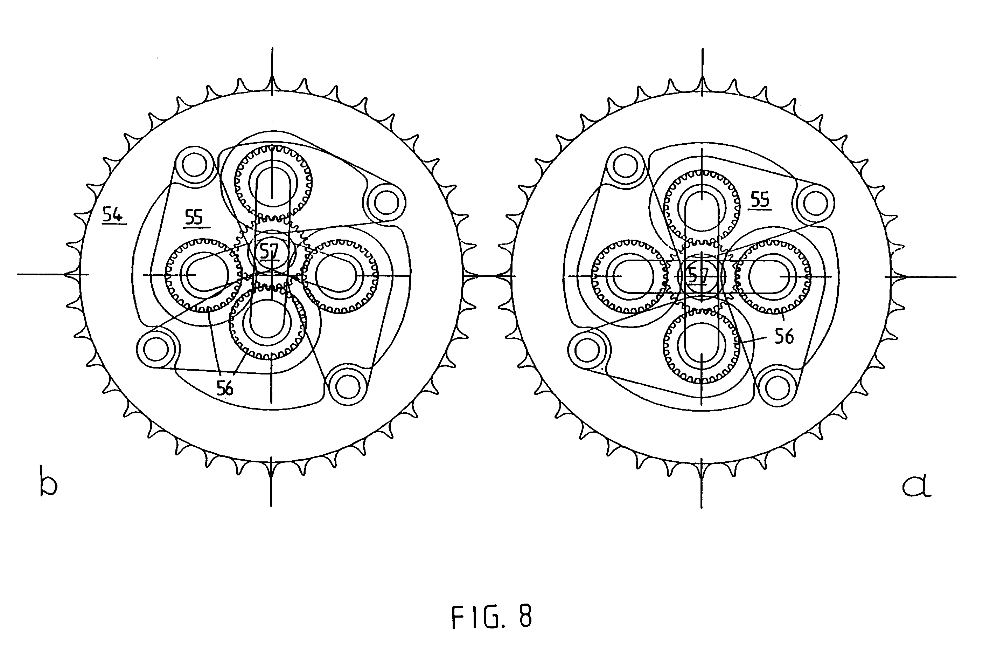

Fig. 5 ist in bezug auf Fig. 6 zu lesen, wo die geradlinigen Hebel 36 bis 39 nach Fig. 2 durch Kniegelenkhebel 50 mit jeweiligen Kniegelenken 51 ersetzt worden sind. Diese Kniegelenke 51 laufen auf einem Führungskreis 52 ab, worauf sie durch einfache (nicht dargestellte Radialstützen) geführt werden können. Durch die Ausgleichsbewegung der Kniegelenke 51 werden die Kniegelenkhebel 50 in verschiedenen Stellungen in unterschiedlichen Winkeln abgeknickt, so daß zwischen dem Antriebsrad 30 und der Abtriebsscheibe 35 über dem gesamten Lastbogen ein konstantes Übersetzungsverhältnis vorliegt. Aus Fig. 7 ist ersichtlich, wie die Kniegelenke 51 durch unterschiedliche Knickung, d.h. unterschiedlichen Winkel zwischen den jeweiligen Hebelarmteilen ein Ausgleich schaffen.

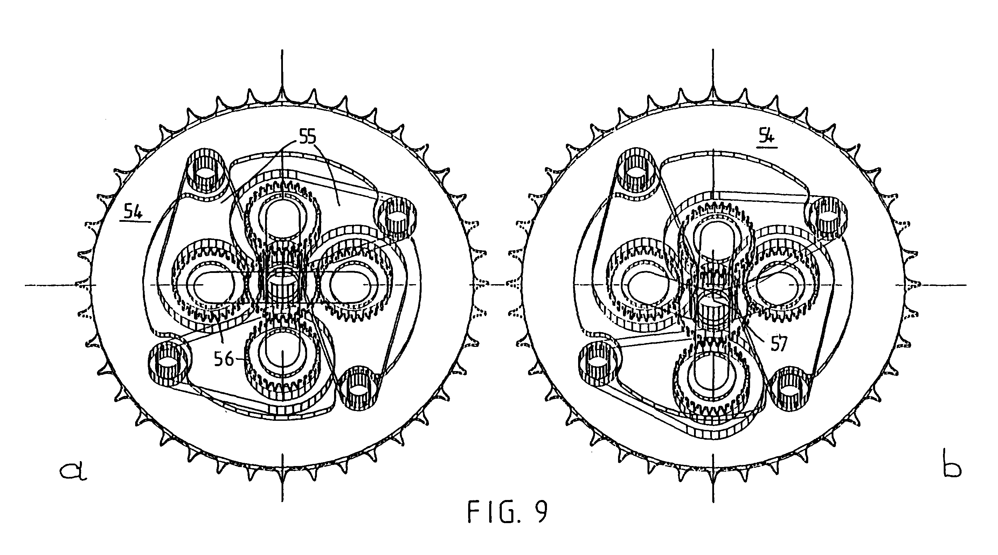

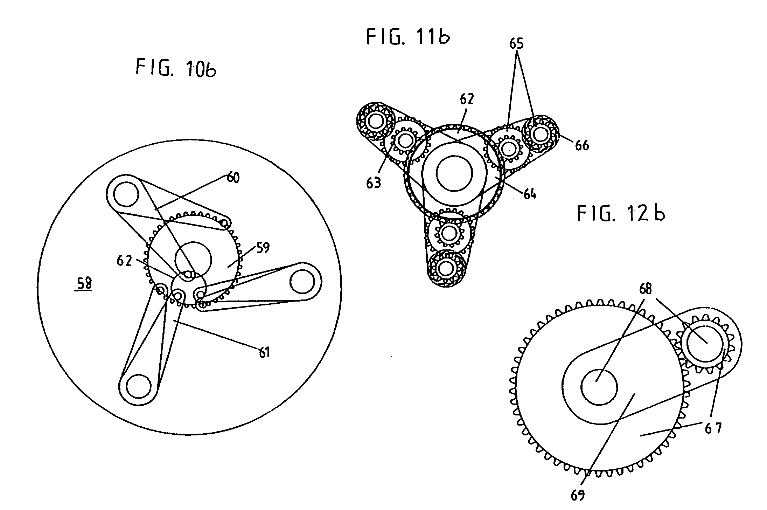

Fig. 8 und 9, jeweils a, b, zeigen eine spezielle Ausführungsform der Erfindung an einem Fahrrad-Zahnkranz 54, der über Kurbeln an die Radialstützen der einzelnen Räder 56 angelenkt ist. Diese Räder stehen mit einem Zentralrad 57 im Zahneingriff, durch dessen exzentrische Verschiebung gegenüber dem Zahnkranz 54 das Übersetzungsverhältnis verändert werden kann.

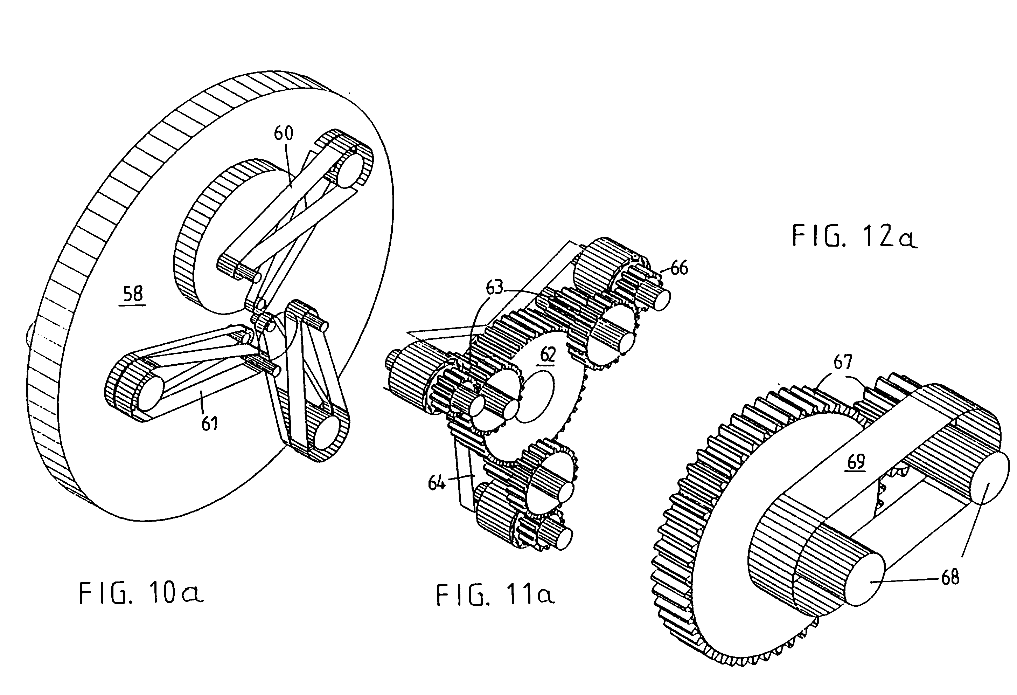

Fig. 10a, b zeigt eine Abtriebsscheibe 58, die von einem Antriebsrad 59 mittels Tangentialstützen 60 angetrieben wird. Die Diagonalstützen des Ausgleichskreises 62 sind mit 61 bezeichnet.

Fig. 11a, b zeigt eine Zentraleinheit mit drei Radialträgern, bei dem mit dem zentralen Antriebsrad 62 drei Satellitenräder 63 auf Radialträgern 64 in permanentem Eingriff stehen. Mittels eines Übersetzungsgetriebes 65 wird die Drehzahl für den Freilauf 66 erhöht, um die dort entstehenden Drehmomente minimal zu halten.

Bei der Ausführungsform nach Fig. 12a, b wird über jeweilige Stirnräder 67 eine Drehmomentübertragung zwischen den Wellen 68, auf denen sie angeordnet sind, bewirkt. Die Wellen bzw. Stirnräder werden durch einen umlaufenden Achsträger 69 gehalten.

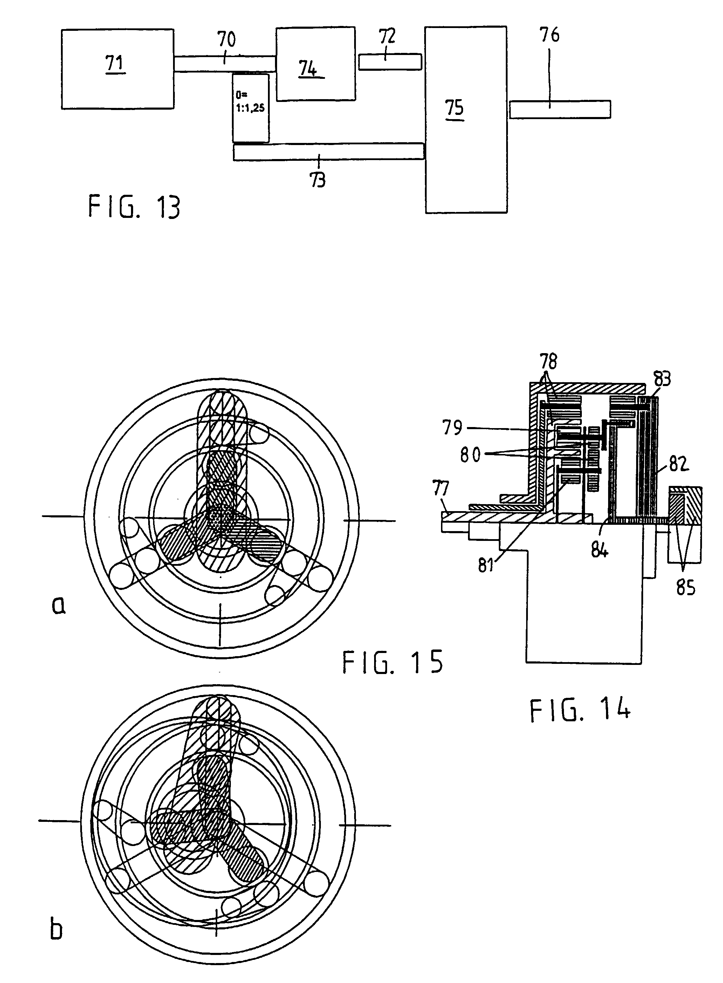

Fig. 13 zeigt eine Antriebsstrangkonzeption für ein Fahrzeug mit einem Satellitengetriebe ohne Kupplung. Hierbei treibt die Welle 70 eines Antriebsmotors 71 über einen Stirnradsatz zwei gegenläufige Wellen 72 und 73 an, wobei ein Satellitengetriebe 74, das zwischen der Welle 70 und der dortigen Abtriebswelle 72 geschaltet ist, eine gezielte Differenzdrehzahl einstellen läßt. Das Übersetzungsverhältnis zwischen den Wellen 70 und 73 ist im vorliegenden Fall mit 1 : 1,25 angenommen worden. Beide Bewegungen der Wellen 72 und 73 werden einem Differential 75 zugeführt, so daß sich im Leerlaufbetrieb für die Abtriebswelle 76 ein Differenzwert 0 einstellen läßt, d.h., das Satellitengetriebe wird auf ein Übertragungsverhältnis von 1,25 gesetzt. Weitere Zahlenbeispiele ergeben sich aus der nachfolgenden Tabelle.

| | Nₗₑₑᵣ | Nᵥₒᵣ₁ | Nᵥₒᵣ₂ | N_{rück} |
|---|---|---|---|---|
| Motor | 800 | 3000 | 6000 | 2000 |
| Welle 1 | 800 | 3000 | 6000 | 2000 |
| Welle 2 | 1000 | 6000 | 10000 | 2000 |
| Welle 3 | -1000 | -3750 | 7500 | 2500 |
| Abtrieb | 0 | 2250 | 2500 | -500 |
| Ü Satel | 1,25 | 2,00 | 1,67 | 1 |

Fig. 14 zeigt ein Satellitengetriebe mit einem integrierten Planetensatz als sogenanntes IVT-Getriebe. Es bezeichnen 77 die Antriebsachse, 78 ein Planetengetriebe, 79 einen Freilauf mit einer Freilaufübersetzung 80 sowie 81 das angetriebene Satellitenrad. Ein Stellhebel 82 wirkt auf die Schwenkachse der Verstellung 83. Das Übersetzungsverhältnis wird durch Betätigung der Exzenterscheibe 84 verändert, wobei diese zum Ausgleich der Ungleichförmigkeit mit einer zyklischen Steuerung 85 verbunden ist.

Fig. 15a und b zeigt das Satellitengetriebe nach Fig. 14 in unterschiedlichen Exzenterstellagen.

## Patentansprüche

1. Stufenlos oder quasistufenlos verstellbares formschlüssiges Satellitengetriebe mit einem Antriebs- und einem Abtriebselement, mit mehreren einzelnen Rädern (21-24; 31-34), die gemeinsam ein Satellitenrad darstellen, das mit einem Zentralrad (20; 30) in einer permanenten Formschlußverbindung steht, wobei das Verhältnis der wirksamen Radien des Satellitenrades und des Zentralrades und die gegenseitige exzentrische Lage des Satellitenrades und des Zentralrades zueinander, die durch geeignete Mittel variiert werden kann, das Drehzahlverhältnis zwischen Antriebs- und Abtriebselement bestimmt,
- wobei die das Satellitenrad bildenden Räder bei exzentrischer Lage zu dem Zentralrad einen drehmomentübertragenden Lastweg und einen lastfreien Weg zyklisch durchlaufen,
- wobei die Räder einerseits um die Satellitenradachse und andererseits über eine richtungsgeschaltete Kupplung nur in eine Richtung um ihre eigene Achse drehbar angeordnet sind, und
- wobei die Räder beim Übergang vom lastfreien Weg zum Lastbogenweg durch den Formschlußeingriff die Eigenrotation blockierend das anliegende Drehmoment übertragen,
**dadurch gekennzeichnet,**
daß eine Ungleichförmigkeit der Drehmomentübertragung durch Variation der durch den Lastbogen bestimmten wirksamen Radien und/oder der wirksamen Tangentialkomponenten durch eine zyklische Regelung zumindest teilweise kompensiert wird.

2. Satellitengetriebe nach Anspruch 1 , dadurch gekennzeichnet, daß das Zentralrad als innenverzahntes Hohlrad oder außenverzahntes Rad ausgebildet ist.

3. Satellitengetriebe nach Anspruch 1 oder 2, dadurch gekennzeichnet, daß die richtungsgeschaltete Kupplung eine mechanisch arbeitende Freilaufkupplung, vorzugsweise eine Klemmkörperfreilaufkupplung oder ein Klinkenfreilauf, oder eine visko-hydraulische oder elektromechanische Kupplung ist.

4. Satellitengetriebe nach einem der Ansprüchen 1 bis 3 dadurch gekennzeichnet, daß die beschriebenen Freiläufe direkt die Umfangsbewegung der Kopplungen zwischen Antriebs- und Abtriebselementen steuern und nicht deren Drehung um die eigene Achse, so daß die Räder dann durch ein Gelenk oder anderes Kraftübertragungselement zwischen Antriebs- und Abtriebselement ersetzt werden.

5. Satellitengetriebe nach einem der vorangegangenen Ansprüche, gekennzeichnet durch eine Kompensation der Ungleichförmigkeit, bei der die momentane durch die eingestellte Exzentrizität entstehende gleichförmige Übersetzung der im wesentlichen konstante Mittelwert, Minimalwert oder Maximalwert mit gleichem Integral unter der Übertragungsfunktion ist, die durch das Verhältnis der Winkelgeschwindigkeit des Antriebes zu der des Abtriebes in Abhängigkeit zum Drehwinkel bestimmt ist.

6. Satellitengetriebe nach einem der vorangegangenen Ansprüche, dadurch gekennzeichnet, daß die Ungleichförmigkeit des Übersetzungsverhältnisses oder der Drehmomentübertragung im wesentlichen kraftabhängig gefedert und/oder durch Ausgleichsmassen kompensiert wird.

7. Satellitengetriebe nach einem der vorangegangenen Ansprüche, dadurch gekennzeichnet, daß zumindest eines der drehmomentübertragenden Räder einen exzentrischen Versatz der Achse aufweist oder eine solche Variation der Exzentrizität einstellbar ist, wobei die Drehung um die eigene Achse die Exzentrizität ohne Verschiebung der Achsmitte verändert.

8. Satellitengetriebe nach einem der vorangegangenen Ansprüche, gekennzeichnet durch eine Drehmomentübertragung zwischen dem jeweils als Scheibe, Rad oder Welle ausgebildeten Antriebselement und dem entsprechenden Abtriebselement über einen Kniegelenkhebel (51), wobei eine zyklisch gesteuerte oder gefederte Knickbewegung des Kniegelenkes die Ungleichförmigkeit der Drehmomente bzw. des Übersetzungsverhältnisses kompensiert.

9. Satellitengetriebe nach einem der vorangegangenen Ansprüche, dadurch gekennzeichnet, daß die Bewegungsbahn der Kniegelenke zumindest im Lastbogenweg einen Kreis beschreibt, vorzugsweise durch eine Kulissen-, Nocken-, Mehrgelenkketten und/oder Gestängeführungen.

10. Satellitengetriebe nach einem der vorangegangenen Ansprüche, dadurch gekennzeichnet, daß die gewählten Geometrien zur Kompensation der Ungleichförmigkeit der Drehmomentübertragung bzw. des Übersetzungsverhältnisses hinsichtlich der Amplitude der zyklischen Bewegung in Abhängigkeit von der Exzentrizität zeitlich konstant bleiben.

11. Satellitengetriebe nach einem der vorangegangenen Ansprüche, dadurch gekennzeichnet, daß die Freiläufe über- oder untersetzt mit einer gegenüber den Satellitenrädern oder Satelliten unterschiedlichen Drehzahl laufen.

12. Satellitengetriebe nach einem der vorangegangenen Ansprüche, dadurch gekennzeichnet, daß die Drehzahlübersetzung zwischen dem Antriebsmittel und dem Abtriebsmittel und/oder die Kompensation der Ungleichförmigkeit der Drehmomente in zwei oder mehr Stufen erfolgt, wobei vorzugsweise die Phasenlage der Stufen so gewählt wird, daß sich die Ungleichförmigkeiten der Stufen im wesentlichen gegenseitig kompensieren.

13. Satellitengetriebe nach Anspruch 12, dadurch gekennzeichnet, daß zwei Stufen eine gemeinsame Exzenterscheibe und zur Kompensation der Ungleichförmigkeit der Drehmomente phasenversetzte Antriebs- und Abtriebsscheiben aufweisen und/oder die Zahl der Räder in zwei solchen Scheiben identisch ist.

14. Satellitengetriebe nach einem der Ansprüche 1 bis 13, dadurch gekennzeichnet, daß mindestens zwei Stufen des Satellitengetriebes in ein Differentialgetriebe, das mit dem Abtriebselement verbunden ist, so eingespeist werden, daß sich die Ungleichförmigkeit der Drehmomente im wesentlichen kompensiert.

15. Satellitengetriebe nach einem der vorangegangenen Ansprüche, dadurch gekennzeichnet, daß mehrere Satellitengetriebe mit in der Drehrichtung entgegengesetzten und/oder umschaltbaren Freiläufen oder über eine Umkehrwelle oder parallele Welle ansteuerbaren Wellen miteinander gekoppelt sind.

16. Satellitengetriebe nach einem der vorangegangenen Ansprüche, dadurch gekennzeichnet, daß das Antriebselement so geteilt wird, daß eine gegenläufig rotierende Welle und eine über ein Satellitengetriebe regelbare Welle in ein Umlaufgetriebe geführt werden, so daß sich die abtreibende (dritte) Welle des Umlaufgetriebes durch Addition der antreibenden Welle stufenlos mit erweitertem Regelbereich regeln läßt.

## Claims

1. Continuously or quasi continuously adjustable positive-coupling satellite gear with a driving and a driven element, with plurality of individual gears (21-24; 31-34) that together form a satellite gear that is in permanent mesh with a central gear (29; 30), the ratio of the effective radii of the satellite gear and of the central gear and the mutual eccentric position of the satellite gear and the central gear, which can be varied by appropriate means, determining the rotational speed ratio between the driving and driven elements,
- when eccentric to the central gear the gears forming the satellite gear pass cycling through a torque-transmitting load path and a load-free path,
- the gears are rotatable about the satellite-gear axis also via a one-way clutch about their own axes,
- when passing from the load path to the load-free path because of the interfit the rotation of the wheels about their own axes is blocked so they can transmit torque,
characterized in that
an irregularity of the torque transmission is at least partially compensated for by cyclically varying the effective radii of the determined by the load curve and/or the effective tangential components.

2. Satellite gear according to claim 1, characterized in that the central gear is an internally toothed ring gear or an externally toothed gear.

3. Satellite gear according to claims 1 or 2, characterized in that the one-way clutch is a mechanically working freewheel-clutch, preferably a wedge-body freewheel clutch or a pawl freewheel, or a visco-hydraulic or electromechanical clutch.

4. Satellite gear according to claims 1 to 3, characterized in that the described freewheels directly control the angular movement of the connections between driving and driven elements and not their rotation about their own axes so that the gears then are replaced by a link or other force-transmitting element between the driving and driven elements.

5. Satellite gear according to one of the preceding claims, characterized by compensation for irregularities wherein the instantaneous uniform transmission ratio created by the set eccentricity is the generally constant average value, minimal value, or maximum value with the same integral with respect to the transmission function which is set by the relationship between the angular speed of the input drive to that of the output drive dependent on the angular position.

6. Satellite gear according to one of the preceding claims, characterized in that the irregularity of the transmission ratio or of the torque transmission is generally compensated for dependent on spring force and/or by counterweight masses.

7. Satellite gear according to one of the preceding claims, characterized in that at least one of the torque-transmitting gears has an eccentric offset of its axis or such a variation of eccentricity can be set so that its rotation about its own axis changes the eccentricity without shifting the axis centre.

8. Satellite gear according to one of the preceding claims, characterized by torque transmission between the driving element formed by a disk, gear, or shaft and the corresponding driven element via a knee-pivot lever (51), a cyclically controlled or spring-loaded bending of the knee lever compensating for the irregularities of the torque or of the transmission ratio.

9. Satellite gear according to one of the preceding claims, characterized in that the movement path of the knee joint describes a circle at least in the load-arc path, preferably by a link guide, cam, multiple-link chain, and/or rod guide.

10. Satellite gear according to one of the preceding claims, characterized in that the selected geometry for compensating for the irregularities of the torque transmission or of the transmission ratio stays constant in time with respect to the amplitude of the cyclical movement dependent on the eccentricity.

11. Satellite gear according to one of the preceding claims, characterized in that the freewheels run at a rotary speed that is stepped up or down from that of the satellite gears.

12. Satellite gear according to one of the preceding claims, characterized in that the transmission ratio between the driving means and the drive means and/or the compensation of the irregularity of the torque takes place in two or more stages, preferably the phase position of the stages being so selected that the irregularities of the stages generally compensate each outer out.

13. Satellite gear according to claim 12, characterized in that two stages have a common eccentric disk and, for compensating for irregularities of the torques, phase-shifted driving and driven disks and/or the number or gears in two such disks is identical.

14. Satellite gear according to one of claims 1 through 13, characterized in that at least two stages of the satellite transmission are fed into a differential transmission that is connected with the driven element such that the irregularity of the torques is generally compensated for.

15. Satellite gear according to one of the preceding claims, characterized in that a plurality of satellite transmission are coupled together with opposite rotation directions and/or switchable freewheels or shafts controlling a reversal shaft or parallel shafts.

16. Satellite gear according to one of the preceding claims, characterized in that the driving elements is so subdivided that an oppositely rotating shaft and a shaft controllable by a satellite gear are guided in a bypass transmission so that the driven (third) shaft of the bypass transmission can be regulated by addition of the driving shaft steplessly in a greater control region.

## Revendications

1. Engrenage satellite à engagement positif, réglable de façon continue ou quasi continue, avec un élément moteur ainsi qu'un élément entraîné, avec plusieurs roues individuelles (21-24; 31-34) qui constituent toutes ensemble une roue satellite qui se trouvent en prise perpétuelle à engagement positif avec une roue centrale (20; 30), le rapport des rayons effectifs de la roue satellite et de la roue centrale ainsi que la position excentrique mutuelle de la roue satellite et de la roue centrale l'une par rapport à l'autre, qui peut être variée par le biais de moyens appropriés, déterminant le rapport de la vitesse de rotation entre l'élément moteur et l'élément entraîné,
- les roues qui forment la roue satellite parcourant cycliquement une distance de charge transmettant le couple ainsi qu'une distance exempte de charge, lorsqu'elles se trouvent en position excentrique par rapport à la roue centrale,
- les roues étant disposées d'un côté de manière mobile autour de l'axe de la roue satellite et, de l'autre côté, par l'intermédiaire d'un accouplement unidirectionnel, de manière à n'être mobile que dans une seule direction autour de leur propre axe,
- lorsque les roues passent du trajet exempt de charge au trajet de l'arc de charge, le couple appliqué est transmis en raison de la prise à engagement positif au moment où la rotation de ces premières autour de leur propre axe est bloquée,
**caractérisé par le fait**
qu'une irregularité de la transmission de couple, qui est due à une variation des rayons effectifs déterminés par l'arc de charge et/ou des composantes tangentielles effectives, est compensée du moins en partie par un réglage cyclique.

2. Engrenage satellite selon la revendication 1, caractérisé par le fait que la roue centrale est réalisée en tant que roue à denture intérieure ou comme roue à denture extérieure.

3. Engrenage satellite selon la revendication 1 ou 2, caractérisé par le fait que l'accouplement unidirectionnel est un accouplement à roue libre travaillant de façon mécanique, de préférence un accouplement à roue libre avec corps de serrage ou une roue libre à cliquet, ou un accouplement visco-hydraulique ou électromécanique.

4. Engrenage satellite selon l'une des revendications 1 à 3, caractérisé par le fait que les roues libres décrites commandent directement le mouvement circonférentiel des couplages entre les éléments moteurs et les éléments entraînés et non pas leur rotation autour de leur propre axe, de sorte que les roues sont donc remplacées par une articulation ou un autre élément de transmission de force entre l'élément moteur et l'élément entraîné.

5. Engrenage satellite selon l'une des revendications précédentes, caractérisé par une compensation de l'irrégularité, dans le cas de laquelle la transmission uniforme momentanée créée par l'excentricité réglée est la valeur moyenne pour l'essentiel constante, la valeur minimale ou maximale avec la même intégrale sous la fonction de transmission qui est déterminée par le rapport de la vitesse angulaire de l'élément moteur à celle de l'élément entraîné en fonction de l'angle de rotation.

6. Engrenage satellite selon l'une des revendications précédentes, caractérisé par le fait que l'irrégularité du rapport de transmission ou de la transmission du couple est compensée pour l'essentiel par une suspension à ressorts, dépendant de la force, et/ou par des masses d'équilibrage.

7. Engrenage satellite selon l'une des revendications précédentes, caractérisé par le fait que l'une au moins des roues transmettant le couple présente un déport excentrique de l'axe ou qu'une telle variation de l'excentricité est réglable, la rotation autour du propre axe modifiant l'excentricité sans décalage du centre d'axe.

8. Engrenage satellite selon l'une des revendications précédentes, caractérisé par une transmission du couple entre l'élément moteur réalisé respectivement en tant que disque, roue ou arbre et l'élément entraîné correspondant par l'intermédiaire d'un levier à genouillère (51), un mouvement de courbage cycliquement contrôlé où élastique de la genouillère compensant l'irrégularité des couples ou bien du rapport de transmission.

9. Engrenage satellite selon l'une des revendications précédentes, caractérisé par le fait que le trajet de mouvement des genouillères décrit un cercle du moins dans le trajet de l'arc de charge, de préférence par un guide de coulisse, à cames, à chaîne à plusieurs articulations et/ou un guide à tiges.

10. Engrenage satellite selon l'une des revendications précédentes, caractérisé par le fait que les géométries choisies pour compenser l'irrégularité de la transmission de couple ou bien du rapport de transmission restent temporellement constantes à l'égard de l'amplitude du mouvement cyclique en fonction de l'excentricité.

11. Engrenage satellite selon l'une des revendications précédentes, caractérisé par le fait que les roues libres tournent à une vitesse de rotation qui, par rapport aux roues satellites ou aux satellites, est multipliée ou démultipliée.

12. Engrenage satellite selon l'une des revendications précédentes, caractérisé par le fait que la transmission de la vitesse de rotation entre le moyen moteur et le moyen entraîné et/ou la compensation de l'irrégularité des couples s'effectue(nt) en deux ou plusieurs étages, de préférence, la position de phase des étages étant choisie de telle manière que les irrégularités des étages se compensent pour l'essentiel réciproquement.

13. Engrenage satellite selon la revendication 12, caractérisé par le fait que deux étages présentent une disque de l'excentrique commune et, pour compenser l'irrégularité des couples, des disques motrices et entraînés déphasées et/ou que le nombre des roues dans deux de telles disques est identique.

14. Engrenage satellite selon l'une des revendications 1 à 13, caractérisé par le fait que deux étages du moins de l'engrenage satellite sont introduites dans un engrenage différentiel qui est relié à l'élément entraîné, de telle manière que l'irrégularité des couples se compense pour l'essentiel.

15. Engrenage satellite selon l'une des revendications précédentes, caractérisé par le fait que plusieurs engrenages satellites sont couplés l'un avec l'autre avec des roues libres opposées dans le sens de rotation et/ou réversibles ou avec des arbres qui peuvent être comandés par un arbre réversible ou un arbre parallèle.

16. Engrenage satellite selon l'une des revendications précédentes, caractérisé par le fait que l'élément moteur est subdivisé de telle sorte qu'un arbre à rotation opposée et un arbre réglable par l'intermédiaire d'un engrenage satellite sont menés dans un engrenage épicycloïdal, de sorte que le (troisième) arbre de sortie de l'engrenage épicycloïdal peut être réglé par addition de l'arbre menant de façon continue avec un domaine de réglage plus étendu.
